# EUROPEAN PATENT APPLICATION

(11) **EP 3 435 364 A1**
(43) Date of publication of application: **30.01.2019**
(21) Application number: 18382517.3
(22) Date of filing: 11.07.2018
(51) Int. Cl.: G09F 21/04, G09F 9/30, G09F 27/00, B60P 3/00, B62K 5/00

(54) **ADVERTISING TRICYCLE**

(30) Priority: 24.07.2017 ES 201730877 U
(71) Applicant: Mare Ingenieria Ferroviaria Alternativa, S.L.U., 13200 Manzanares (ES); Pinilla Trujillo, José Luis, 13200 Manzanares (ES)
(72) Inventor: PINILLA TRUJILLO, José Luis, 13200 MANZANARES (ES)
(74) Representative: Pons Ariño, Angel

(57) **Abstract**

The invention relates to an advertising tricycle comprising a frame (1) with side wheels (8) joined by means of an axle (7), a lower rack (6), a cabinet supported on the rack (6) having a through hole, audio-visual equipment (21) housed inside the cabinet, a computer controller and a power source. The tricycle incorporates a support for housing the audio-visual equipment (21), and a lifting device securely attached to the support (21) for introducing and removing the audio-visual equipment from the inside of the cabinet, which comprises a hand crank, a spindle with an upper end securely attached to the support, and a transmission mechanism located between the hand crank and the spindle which transmits the rotary motion of the hand crank by lifting and lowering the spindle.

## Description

### OBJECT OF THE INVENTION

The present invention pertains to the technical field of tricycles, as well as to the field of visual advertising with land vehicles, and relates in particular to an advertising tricycle that incorporates retractable audio-visual devices for projecting promotional videos.

### BACKGROUND OF THE INVENTION

Numerous vehicles that adapt their structures to display advertising are known in the current state of the art. Such vehicles include bicycles and tricycles to which a trailer is attached to display a large poster. Some notable advantages offered by tricycles include, when powered by pedals, that they provide a more environmentally-friendly image and allow the product to be promoted in urban environments and in pedestrian areas which cannot be accessed by conventional vehicles.

However, this type of tricycle often displays static information, given that the use of LED-based screens or monitors entails having a power source, which in the majority of cases either does not have enough autonomy or cannot be transported due to their dimensions and weight.

To present moving information, trailers having one or more screens that are powered by the battery of a towing vehicle, usually a car, are known. First of all, this entails greater costs with respect to the costs of a bicycle, in addition to difficulties, limitations and even prohibitions when operating and driving the vehicle through narrow or pedestrian streets which are usually the busiest, and therefore the most interesting for displaying advertising screens.

### DESCRIPTION OF THE INVENTION

The object of the invention consists of an advertising tricycle, the front axle of which, where the side wheels of the tricycle are located, is modified to support a platform on which there is a cabinet that houses a retractable audio-visual equipment for projecting advertising messages, together with the corresponding power supply and control devices of said equipment.

The cabinet, in which the handlebar of the tricycle is also mounted, has an open upper face and further comprises a plurality of fold-out display trays attached to the side faces thereof, which are intended to support additional advertising items such as brochures, catalogues, etc.

The audio-visual equipment, consisting of at least two screens attached to each other by the rear faces thereof and corresponding speakers, is mounted on a display support housed inside the cabinet, which is in turn attached to a jack-like lifting mechanism, preferably with a lifting worm gear screw, manually operable by a user through a hand crank, which makes the display support emerge with the audio-visual equipment through the open upper face of the cabinet to start or stop the projection of advertising messages.

The audio-visual equipment can be turned off and put back inside the cabinet whenever the projection of the advertising messages is intended to end, in order to move the tricycle to another point and project the message once more.

In a preferred embodiment, the tricycle incorporates a protective gable roof-type cover to cover the audio-visual equipment from above and avoid damage caused from exposure to external environmental conditions. Said cover is securely attached to the display support on which the equipment is mounted, so that it is also actuated by the lifting mechanism and can be extended and retracted at the same time as said support.

In a preferred embodiment, the tricycle is also expected to incorporate lighting means located in different points of the cabinet as well as in the retractable support, and they are powered by the power supply devices housed in said cabinet. A controller operable by the user turns said lighting means on and off, and also turns the audio-visual means on and off and regulates them.

The advertising tricycle described above makes it possible to project audio-visual advertising messages, both when the tricycle is standing still and while being driven in environments that cannot be usually accessed by the motorised vehicles normally used in these cases due to their size and weight. It represents a simple, cost-effective and versatile solution to create a dynamic and attractive promotional tool.

### DESCRIPTION OF THE DRAWINGS

To supplement the description being made and to aid a better comprehension of the characteristics of the invention according to a preferred example of an embodiment thereof, the present specification is accompanied by a set of drawings in which the following has been represented in an illustrative rather than limitative manner:
Figure 1 shows a front perspective view of the advertising tricycle with the audio-visual equipment in an extended position, which features the main components thereof.

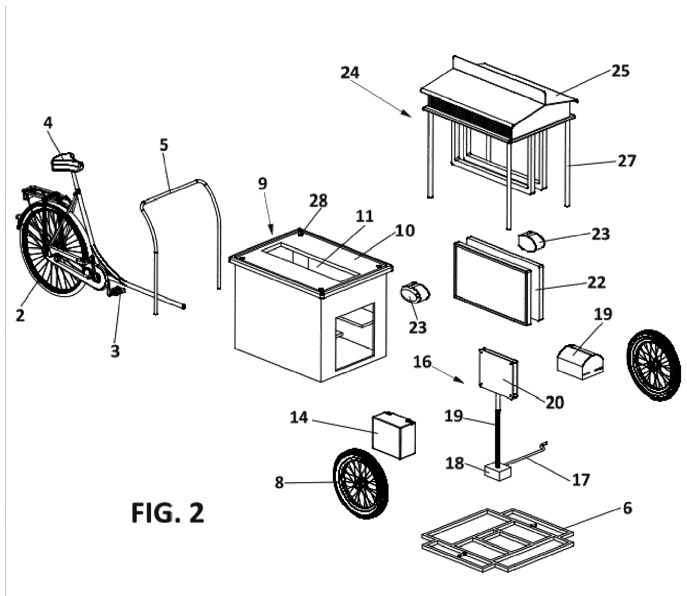

Figure 2 shows an exploded perspective view of the components of the advertising tricycle.
Figure 3 shows a perspective view of the moving mechanism of the audio-visual equipment.
Figure 4 shows a rear perspective view of the advertising tricycle with the audio-visual equipment in a retracted position.

### PREFERRED EMBODIMENT OF THE INVENTION

A detailed explanation of a preferred embodiment of the object of the present invention is provided below, with the help of the aforementioned figures.

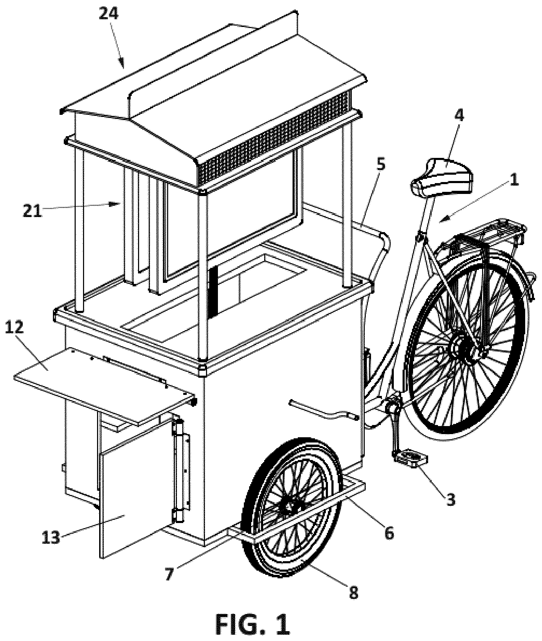

The advertising tricycle described, shown in Figure 1 in the working position thereof, is formed by a frame (1) with a rear end in which a rear wheel (2), pedals (3) and a saddle (4) are located, and a front end in which a handlebar (5) and a lower rack (6) are located, which has an axle (7) on which two parallel side wheels (8) are mounted.

Supported on the rack (6) and located above the axle (7) there is a polygonal hollow cabinet (9) with an upper face (10) in which a hole (11) is provided. Said cabinet (9) also has at least one fold-out tray (12) attached to one of the side faces thereof and at least one gate (13) that can be opened to access the inside thereof, which houses a power supply (14) and a computer controller (15) operable by a user of the tricycle.

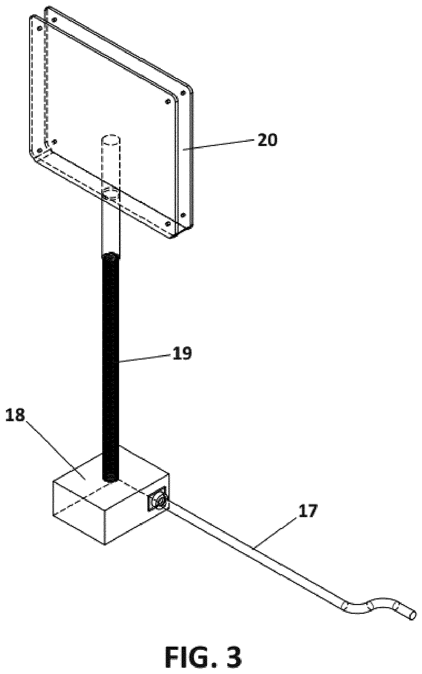

Inside said cabinet (9) there is also a screw jack-type lifting device (16), shown in detail in Figure 3. The lifting device (16) comprises a rotary hand crank (17) with manual actuation, a spindle (18) that moves up and down with a longitudinal motion, and a transmission mechanism (19) located between the hand crank (17) and the spindle (18), which transmits the rotary motion of the hand crank (17) in the rectilinear motion of the spindle (18).

The spindle (18) has an upper end to which a support (20) that moves longitudinally along with the spindle (18) is securely attached to emerge and retract from the inside of the cabinet through the hole (11) defined in the upper face (10).

Audio-visual equipment (21) consisting of at least one screen (22) and speakers (23), powered by the power supply (14) and controlled by the controller (15) for projecting advertising messages, is securely attached to said support (20).

In the preferred embodiment described herein, the tricycle further incorporates a protective cover (24) securely attached to the lifting device (16). As shown in the attached figures, the protective cover (24) comprises a gable roof (25) that covers a frame (26) that is securely attached to the screen (22) from above, which is surrounded by the perimeter edge thereof. Columns (27) protrude from the below roof (25) and move through the inside of corresponding transverse housings (28) defined in the corners of the upper face (10) of the cabinet (9), driven by the same lifting device (16).

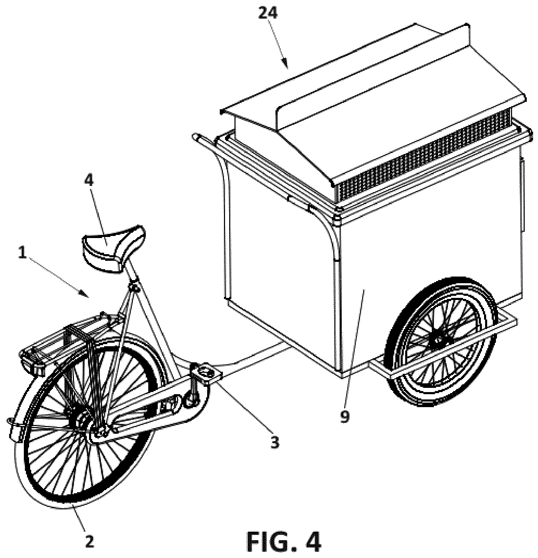

This way, as seen in Figure 4, in the situation in which the audio-visual equipment (21) is retracted inside the cabinet (9), the roof (25) covers the upper face (10) and the hole (11), preventing foreign elements from entering said cabinet (9).

## Claims

1. An advertising tricycle for projecting advertising messages, comprising:
- a frame (1) having a first end in which parallel side wheels (8) are located attached to each other by means of an axle (7),
- a lower rack (6) located on the first end of the frame (1),
- a cabinet (9) supported on the rack (6), which has an upper face (10) having a through-hole (11),
- an audio-visual equipment (21) for projecting audio-visual advertising messages housed inside the cabinet (9), comprising at least one screen (22) and speakers (23),
- a computer controller (15) operable by a user for controlling the audio-visual equipment, and
- a power source (14) for powering the audio-visual equipment and the controller (15),
the tricycle being **characterised in that** it incorporates:
- a support (20) for housing the audio-visual equipment (21), and
- a lifting device (16) securely attached to the support (21) for introducing and removing the audio-visual equipment from the inside of the cabinet (9) through the hole (11) of the upper face (10), the lifting device (16) comprising:
- a hand crank (17),
- a spindle (19) with an upper end securely attached to the support (20), and
- a transmission mechanism (18) located between the hand crank (17) and the spindle (19), which transmits the rotary motion of the hand crank (17) by lifting and lowering the spindle (19).

2. The advertising tricycle according to claim 1, **characterised in that** it incorporates a retractable protective cover (24) for covering the audio-visual equipment (21) from above, the protective cover (24) being securely attached to the lifting device (16).

3. The advertising tricycle according to claim 2, **characterised in that** the protective cover (24) comprises:
- a gable roof (25).
- a frame (26) securely attached to the screen (22) which is surrounded by the perimeter edge thereof, which protrude from below the roof (25), and
- columns (27) that protrude from below the roof (25), and move through the inside of corresponding transverse housings (28) defined in the corners of the upper face (10) of the cabinet (9).
